(19) Europäisches Patentamt
European Patent Office
Office européen des brevets

(11) Veröffentlichungsnummer: **0 027 587**
**A1**

(12) # EUROPÄISCHE PATENTANMELDUNG

(21) Anmeldenummer: 80106024.5

(22) Anmeldetag: 04.10.80

(51) Int. Cl.³: **B 32 B 27/04**
B 32 B 27/08, C 08 G 63/66

(30) Priorität: 13.10.79 DE 2941598

(43) Veröffentlichungstag der Anmeldung:
29.04.81 Patentblatt 81/17

(84) Benannte Vertragsstaaten:
AT BE CH DE FR GB IT LI LU NL SE

(71) Anmelder: BASF Aktiengesellschaft
Carl-Bosch-Strasse 38
D-6700 Ludwigshafen(DE)

(72) Erfinder: Neuberg, Rainer, Dr.
Duerkheimer Strasse 9
D-6701 Dannstadt-Schauernheim 2(DE)

(72) Erfinder: Seiler, Erhard, Dr.
Erpolzheimer Strasse 1
D-6700 Ludwigshafen(DE)

(72) Erfinder: Welz, Martin
Kaiserslauterer Strasse 231
D-6702 Bad Duerkheim 3(DE)

(54) **Verformbarer Verbundwerkstoff aus gefülltem Polyolefin, einem Schmelzkleber und einer weichgemachten PVC-haltigen Deckschicht sowie Verfahren zu seiner Herstellung.**

(57) Die Erfindung betrifft ein Verfahren zur Herstellung von dreischichtigen Verbundwerkstoffen aus einer äußeren Schicht aus einem Olefinpolymerisat, das einen Füllstoff enthält, einer inneren Schicht aus einer Klebstoffmasse und einer äußeren Schicht aus einem - gegebenenfalls geschäumten - Polyvinylchlorid, wobei die Klebstoffmassen bestehen aus a) etwa 99 bis 60 Gew.% aus einem thermoplastischen, segmentierten Copolyätherester, der aus einer Vielzahl von wiederkehrenden, durch Esterbindungen miteindander verbundenen kurz- und langkettigen Estereinheiten aufgebaut ist, wobei der Anteil der kurzkettigen Estereinheiten der Formel

$$-\underset{\overset{\|}{O}}{C}-R-\underset{\overset{\|}{O}}{C}-O-A-O-$$

15 bis 75 Gew.% beträgt und der Anteil der langkettigen Estereinheiten der Formel

$$-\underset{\overset{\|}{O}}{C}-R-\underset{\overset{\|}{O}}{C}-O-B-O-$$

25 bis 85 Gew.% des Copolyätheresters beträgt, wobei R den nach Abzug der Carboxylgruppen von aromatischen Dicarbonsäuren mit einem Molekulargewicht unter 350 verbleibenden zweiwertigen Rest, A den nach Abzug der Hydroxylgruppen von einem Diol mit einem Molekulargewicht unter 350 verbleibenden zweiwertigen Rest und B den nach Abzug der endständigen Hydroxylgruppen von einem langkettigen Glykol verbleibenden zweiwertigen Rest bedeuten, und zu b) etwa 1 bis 40 Gew.% eines oder mehrerer niedrigmolekularer thermoplastischer Harze mit Schmelzpunkten über 100°C, die mit dem linearen thermoplastischen Copolyätherester (a) homogene Gemische bilden.

EP 0 027 587 A1

# Verformbarer Verbundwerkstoff aus gefülltem Polyolefin, einem Schmelzkleber und einer weichgemachten PVC-haltigen Deckschicht sowie Verfahren zu seiner Herstellung

Die Erfindung betrifft ein Verfahren zur Herstellung von dreischichtigen Verbundwerkstoffen. Diese Werkstoffe sind aufgebaut aus (1) einer ersten äußeren Schicht aus Olefinpolymerisat, das 10 bis 60 Gew.% eines festen inerten Füllstoffs enthält, (2) einer zweiten inneren Schicht aus einer Klebstoffmasse, welche thermoplastische segmentierte Copolyätherester-Elastomere und ein oder mehrere damit verträgliche thermoplastische niedermolekulare Harze enthält und einer dritten äußeren Schicht aus einem - gegebenenfalls geschäumten - Polyvinylchlorid, das 15 bis 40 Gew.% eines Weichmachers enthält oder einer Polyvinylchlorid enthaltenden thermoplastischen Kunststoffmischung, wobei die Schicht (1) mit der Schicht (2) gegebenenfalls koextrudiert wird oder die Schicht (2) aus Lösung aufgebracht wird und beide Schichten (1) und (2) mit der festen Schicht (3) zusammengeführt werden und die äußeren Schichten (1) und (3) bei erhöhter Temperatur sowie gegebenenfalls bei erhöhtem Druck durch die innere Schicht (2) verklebt werden.

Bei derartigen dreischichtigen Verbundwerkstoffen handelt es sich um zusammengesetzte Materialien, die so fest miteinander verbunden sind, daß man die Eigenschaften jeder Komponente für die Vorteile der Gesamtkonstruktion nutzt. Dabei ist ein guter Verbund zwischen den äußeren Deckschichten (1) und (3) erforderlich.

Es ist bekannt, eine Schicht (1) aus verstärkten Olefinpolymerisaten mit einer Schicht (3) aus Polyvinylchlorid (PVC) zu verbinden, wobei als Haftvermittler Bindemittel verwendet werden, die aus wärmehärtenden Kondensationsharzen auf z.B. Basis von Polyurethanen bestehen können.

Nach bekannten Verfahren werden jedoch Verbundwerkstoffe erhalten, die keine ausreichende Wärmebeständigkeit aufweisen. Auch die Kältefestigkeit der bekannten Verbundwerkstoffe aus verstärktem Polyolefin (1) und Polyvinylchlorid (3) läßt noch zu wünschen übrig. Ein weiterer Nachteil bekannter Verfahren ist die umständliche Herstellung verformter Gegenstände aus obigem Verbundwerkstoff. Es wird nämlich stets das Kaschieren mit der PVC-Schicht in einem separaten Arbeitsgang nach dem Formen bzw. Stanzen der tragenden Schicht aus verstärktem Olefinpolymerisat vorgenommen. Dies erfordert den Auftrag eines Klebers auf die Olefinpolymerisatschicht (1) das Aufpressen der Weich-PVC-Schicht (3) in einer Form bzw. mit Vakuum und das Aushärten des Klebers, eventuell beschleunigt durch Erwärmen.

Der Erfindung lag daher die Aufgabe zugrunde, ein Verfahren zur Herstellung von Verbundwerkstoffen aus verstärktem Olefinpolymerisat (1) und Polyvinylchlorid (3) aufzufinden, bei dem das bisher übliche arbeitsintensive Kaschierverfahren vereinfacht ist. Eine weitere Aufgabe der Erfindung war das Auffinden eines Verbundstoffs aus verstärktem Olefinpolymerisat (1) und Weich-PVC (3), der eine hohe Wärmebeständigkeit und Kältefestigkeit aufweist, ohne daß die Verarbeitbarkeit wie beispielsweise die Formung in der Wärme beeinträchtigt wird.

Weiterhin bestand die Aufgabe, einen bei Raumtemperatur klebfreien Schmelzkleber zu finden, der ein freies Stapeln bzw. Aufrollen der mit Schmelzkleber beschichteten Schichten (1) und (3) ermöglicht, ohne daß diese - z.B. bei der Lagerung oder beim Transport - zusammenkleben.

Für die Lösung dieser Aufgabe gibt es bereits einige Lösungsansätze.

So wird in DE-PS 2 753 697 ein Dreischicht-Verbund aus gefülltem Polyolefin, Haftvermittler und Polyvinylchlorid beschrieben, wobei der Schmelzkleber aus einem vernetzten Äthylencopolymerisat besteht. Obwohl nach dem bekannten Verfahren gut haftende Verbunde hergestellt werden konnten, war die Klebfreiheit der verwendeten Schmelzkleberschicht bei Raumtemperatur nicht ausreichend. Störend war auch der nachträgliche Vernetzungsschritt, ohne den keine ausreichende Wärmebeständigkeit der Verklebung erzielt werden konnte.

In der DE-OS 2 163 670 werden segmentierte Copolyätherester in Mischung mit Harzen beschrieben, die für die Verklebung einer großen Zahl von Kunststoffen geeignet sein sollen. Diese sehr umfangreiche Substanzklasse ist für die Schmelzkleber-Anwendung seit langem bekannt, z.B. aus der US-PS 3 013 914. Sie werden für die Verklebung zahlreicher Kunststoffe empfohlen. Für Polyolefine und speziell für gefüllte Polyolefine, die sich von reinen Polyolefinen in ihren Werkstoffeigenschaften wie Steifigkeit, Dehnung und Schlagzähigkeit sowie Oberflächenhärte und -struktur sehr stark unterscheiden, werden sie dagegen nicht erwähnt.

Zur Lösung der Aufgabe, einen festhaftenden Verbund aus PVC oder PVC-haltigen Thermoplasten und gefüllten Polyolefinen, speziell holzmehlgefülltem Polypropylen, mit Hilfe eines Schmelzhaftklebers zu erzeugen, der bei Raumtemperatur eine klebfreie Oberfläche aufweist, konnte der Stand der Technik daher nichts beitragen.

Überraschend wurde nun gefunden, daß homogene Gemische, die bestehen aus (a) 99 bis 60, vorzugsweise 80 bis 60 Gew.% eines thermoplastischen, segmentierten Copolyätheresters, aufgebaut aus einer Vielzahl von wiederkehrenden, durch Esterbindungen miteinander verbundenen kurz- und langkettigen Estereinheiten, wobei der Anteil der kurzkettigen Estereinheiten der Formel

$$-\underset{\underset{O}{\|}}{C}-R-\underset{\underset{O}{\|}}{C}-O-A-O-$$

15 bis 75 Gew.% beträgt und der Anteil der langkettigen Estereinheiten der Formel

$$-\underset{\underset{O}{\|}}{C}-R-\underset{\underset{O}{\|}}{C}-O-B-O-$$

25 bis 85 Gew.% des Copolyätheresters beträgt, wobei R den nach Abzug der Carboxylgruppen von aromatischen Dicarbonsäuren mit einem Molekulargewicht unter 350 verbleibenden zweiwertigen Rest A den nach Abzug der Hydroxylgruppen von einem Diol mit einem Molekulargewicht unter 350 verbleibenden zweiwertigen Rest und B den nach Abzug der endständigen Hydroxylgruppen von einem langkettigen Glykol verbleibenden zweiwertigen Rest bedeuten, und (b) aus 1 bis 40, bevorzugt 20 bis 40 Gew.% eines oder mehrerer niedermolekularer thermoplastischer Harze mit Schmelzpunkten über 100°C, das mit dem linearen thermoplastischen Copolyätherester (a) bei Raumtemperatur klebfreie Schmelzhaftkleber darstellen, die gleichzeitig eine sehr gut haftende Verklebung von gefüllten Polyolefinen und PVC-haltigen Deckschichten bewirken, die bei Temperaturen bis 110°C wirksam bleibt.

Besonders überraschend war, daß die reinen Copolyätherester (a) ohne Harzzusatz (b) eine stärkere Oberflächenklebrigkeit zeigten als bei Zusatz von bis zu 40 Gew.% spezieller, häufig zur Erhöhung der Klebrigkeit empfohlener Harze (b).

Höhere Anteile als 40 Gew.% des Harzes (b) führten zu erhöhten, für die gestellte Aufgabe prohibitiven Oberflächenklebrigkeit. Eine ausreichende Festigkeit des Verbundes aus gefüllten Polyolefinen, Schmelzhaftkleber und PVC-haltigen Thermoplasten bis zu Temperaturen von 110°C wurde nur mit Copolyätherester (a)/Harz (b)-Mischungen erreicht, bei denen das Harz (b) Schmelzpunkte über 100°C aufweist.

Bei der Prüfung der Dauerwärmebeständigkeit der Verklebungen erwies sich das erfindungsgemäße Schmelzklebersystem als besonders wirksam. Dies ist besonders deshalb bemerkenswert, weil die PVC-haltigen Deckschichten hohe Weichmacheranteile besitzen, die zur Migration in die angrenzenden Schichten neigen und damit die Verbundfestigkeit beeinträchtigen, sofern die Sperrwirkung der Schmelzkleberschicht nicht ausgeprägt ist.

Unter Olefinpolymerisaten werden die einschlägig bekannten Homo- und Copolymerisate des Äthylens und des Propylens mit copolymerisierbaren olefinisch ungesättigten Verbindungen verstanden. Geeignete Olefinpolymerisate sind z.B. Polyäthylen und Polypropylen mit einer Dichte von 0,890 bis 0,965 g/cm$^3$ (nach DIN 53 479) und einem Schmelzindex von 0,1 bis 20 g/10 min (nach ASTM D 1238-65 T bei einer Temperatur von 190°C und einem Auflagegewicht von 2,16 kg), sowie Mischungen dieser Olefinpolymerisate untereinander. Diese Olefinpolymerisate können zur Erhöhung der Schlagzähigkeit, gegebenenfalls noch mit 1 bis 20 Gew.-Teilen an üblichen Kautschuken wie Äthylen-Propylen-Copolymerisaten, EPDM-Kautschuken oder Blockcopolymerisaten aus Styrol und Dien versehen sein. Diese Polymerisate sind aus der Polymerchemie wohlbekannt, so daß an dieser Stelle nicht näher darauf eingegangen wer-

den braucht. Als besonders geeignetes Olefinpolymerisat wird das isotaktische Polypropylen genannt.

Die Olefinpolymerisate sind mit 10 bis 60, bevorzugt 20 bis 50 Gew.%, bezogen auf das Gewicht des gefüllten Olefinpolymerisats, eines üblichen festen und inerten Füllstoffs gefüllt. Für die Verwendung der Olefinpolymerisatschicht geeignete Füllstoffe sind beispielsweise Glasfasern, Glaskugeln, Talkum, Kreide, Glimmer sowie besonders geeignet feinteiliges Holz. Als Holzteilchen kommen alle marktgängigen Typen in einem Teilchenbereich von 10 bis 5 000 µm Länge und 10 bis 2 000 µm Dicke in Betracht. Die Holzmehle können sowohl in Pulverform als auch kompaktiert eingesetzt sein. Zusätzlich zu den obigen Füllstoffen können die Olefinpolymerisatmassen noch einschlägig bekannte Flammschutzmittel, Mittel zur Verbesserung der Schlagfestigkeit wie Polyäthylen niederer Dichte, Stabilisatoren oder Polymerisat-Abfallstoffe enthalten.

Unter Polyvinylchlorid (PVC) wird das aus der Polymerchemie bekannte Polymerisationsprodukt des Vinylchlorids, das einen theoretischen Chlorgehalt von 56 bis 57 Gew.% und einen Erweichungspunkt von 75 bis 80°C aufweist, verstanden. Der K-Wert des Polyvinylchlorid liegt vorzugsweise bei 70 bis 90 (gemessen nach DIN 53 726). Ein geschäumtes Polyvinylchlorid ist ein künstlich hergestellter leichter Schaumkunststoff mit zelliger Struktur. Für die erfindungsgemäßen Verbundstoffe sind PVC-Weichschäume mit geschlossenzelligen Schäumen und mit Dichten von 0,6 bis 1,3 $g/cm^3$ geeignet. Das als Schicht (3) verwendete Polyvinylchlorid soll ein sog. Weich-PVC sein. Es enthält dementsprechend einen für PVC gebräuchlichen Weichmacher in Mengen von 15 bis 40, bevorzugt 20 bis 35 Gew.%, bezogen auf das Gewicht des Weich-PVC. Geeig-

nete Weichmacher sind beispielsweise Trikresylphosphat, Phthalsäureester oder Ester aliphatischer Dicarbonsäuren. Das Weich-PVC kann außerdem noch die einschlägig üblichen Stabilisatoren, Füllstoffe und Pigmente enthalten.

Geeignete, Polyvinylchlorid enthaltende Kunststoffmischungen bestehen aus Acrylnitril-Butadien-Styrol-Copolymerisat (ABS), PVC und obigen Weichmachern, deren Mischungsverhältnis je nach speziellem Einsatzzweck verändert werden kann und die zusätzlich häufig Flammschutzmittel, Pigmente, Füllstoffe, Fließhilfsmittel usw. enthalten.

Bei dem anmeldungsgemäßen Verfahren werden die Schicht (1) aus gefülltem Polyolefin und die Schicht (2) aus Copolyätherester und damit verträglichem niedermolekularem Harz mit Schmelzpunkt über 100°C als Schmelzen zusammen in einem Arbeitsgang auf die feste Schicht (3) aus dem PVC-haltigen thermoplastischen Kunststoff koextrudiert. Das Verfahren der Düsenkoextrusion auf eine feste Unterlage ist an sich bekannt und beispielsweise von G. Kautz in "VDI Zeitschrift" 115 (1973) 1184 bis 1189 und in "Kunststoffe" 64 (1974) 330 bis 334 beschrieben. Unter erhöhter Temperatur und erhöhtem Druck wird anmeldungsgemäß eine Temperatur von 100 bis 180°C und ein Druck von 1 bis 70 bar verstanden.

In einer Variante dieses anmeldungsgemäßen Verfahrens wird die Schicht (1) aus gefülltem Polyolefin auf die Schicht (3) aus PVC-haltigem thermoplastischem Kunststoff extrudiert, wobei die Schicht (3) bereits die aus Lösung oder durch Koextrusion aufgebrachte Schicht (2) aus Copolyätherester (a) und Harz (b) enthält. Eine weitere Variante dieses Verfahrens besteht darin, daß die mit der Schmelzhaftkleber-Schicht (2) ausgerüstete feste Schicht (3) aus

PVC oder PVC-haltigen Thermoplasten auf die erhitzte Schicht (1) aus gefülltem Polyolefin durch Druck aufgeschweißt wird.

Weiterhin besteht die Möglichkeit, die Schmelzkleber-Schicht (2) auf die Schicht (1) aus gefülltem Polyolefin durch Koextrusion oder aus Lösung aufzubringen und mittels Druck und Wärme mit der festen Schicht aus den PVC-haltigen Thermoplasten zu verbinden.

Die als Haftvermittler wirkende Schicht (2) enthält a) 99 bis 60 Gew.%, vorzugsweise 80 bis 65 Gew.% lineare thermoplastische segmentierte Copolyätherester, welche aus kurz- und langkettigen Estereinheiten aufgebaut sind, wobei der Anteil der kurzkettigen Estereinheiten der Formel

$$-\underset{\underset{O}{\|}}{C}-R-\underset{\underset{O}{\|}}{C}-O-A-O-$$

15 bis 75 Gew.%, bezogen auf den Copolyätherester beträgt und der Anteil der langkettigen Estereinheiten der Formel

$$-\underset{\underset{O}{\|}}{C}-R-\underset{\underset{O}{\|}}{C}-O-B-O-$$

25 bis 85 Gew.%, bezogen auf den Copolyätherester, beträgt, wobei R den nach Abzug der Carboxylgruppen von aromatischen Dicarbonsäuren mit einem Molekulargewicht unter 350 verbleibenden zweiwertigen Rest, A den nach Abzug der Hydroxylgruppen von einem Diol mit einem Molekulargewicht unter 350 verbleibenden zweiwertigen Rest und B den nach Abzug der endständigen Hydroxylgruppen von einem langkettigen Glykol verbleibenden zweiwertigen Rest bedeuten.

Die Substanzklasse der Copolyätherester ist bekannt (z.B. "Journal of Polymer Science Vol. XIV, S. 15-28 (1954)", "Angewandte Makromolekulare Chemie 29/30, S. 267 - 289 (1973)"). Ihre Herstellung erfolgt nach üblichen Verfahren (z.B. US 2.865.891, US 3.023.192).

Die zur Herstellung von Copolyätherestern geeigneten Dicarbonsäuren sind aromatische, aliphatische oder cycloaliphatische Dicarbonsäuren niedrigen Molekulargewichts. Sie können verschiedene Substituenten enthalten, die nicht in die Polykondensationsreaktion eingreifen. Zu geeigneten aromatischen Dicarbonsäuren zählen Terephthalsäure, Isophthalsäure, Phthalsäure, 2.6-Naphthalindicarbonsäure u.a. Hydroxysäuren wie beispielsweise p-Hydroxy-benzoesäure können ebenso verwendet werden, sofern eine aromatische Dicarbonsäure ebenfalls anwesend ist. Zu geeigneten aliphatischen und cycloaliphatischen Dicarbonsäuren zählen Adipinsäure, Sebazinsäure, 1,4-Cyclohexandicarbonsäure u.a.

Die Diole niederen Molekulargewichts bzw. deren esterbildende Derivate, die zur Herstellung der harten Segmente der Copolyätherester verwendet werden, besitzen Molekulargewichte unter 250. Geeignete Diole, die unter Bildung kurzkettiger Estereinheiten reagieren, sind beispielsweise aliphatische, alicyclische oder aromatische Dihydroxyverbindungen. Zu den bevorzugten Diolen zählen solche, die 2 bis 15 C-Atome enthalten wie Äthylen-, Propylen-, Tetramethylen-, Hexamethylen-, Decamethylenglykol, Cyclohexandimethanol, Hydrochinon u.a. Geeignete Bisphenole sind z.B. 2,2'-Bis-(p-hydroxyphenyl)propan, Bis-4,4'-(hydroxyphenyl)sulfon u.a.

Zu geeigneten langkettigen Glykolen, die zur Herstellung der weichen Segmente der Copolyätherester verwendet wer-

den können, zählen Poly(alkylenäther)glykole wie beispielsweise Poly(äthylenäther)glykol, Poly(tetramethylenäther)glykol u.a. Die Molekulargewichte dieser langkettigen Glykole können 400 bis 6 000 betragen.

Des weiteren enthält Schicht (2) zu 1 bis 40 Gew.%, vorzugsweise 20 bis 40 Gew.% bezogen auf die Mischung b) thermoplastische niedermolekulare Harze mit Schmelzpunkten über 100°C, welche mit dem Copolyätherester (a) verträgliche Gemische bilden können, bis mindestens 150°C wärmebeständig sind und Schmelzviskositäten von weniger als etwa 10 000 cP bei 200°C, bestimmt nach ASTM D 1824/66, aufweisen (gemessen mittels Brookfield-Viskosimeter).

Geeignete niedermolekulare Harze (b) sind Terpenharze, Cumaron/Inden-Harze, niedermolekulare α-Methylstyrol-Vinyltoluol-Harze, wie sie von zahlreichen Firmen, z.B. Hercules, Reichhold, Neville, CdF-Chemie u.a. unter Handelsnamen wie Alresen, Norsolen, Nevchem, Hercures, Piccotex etc. angeboten werden.

Zusätzlich zu diesen niedermolekularen Harzen (b) können weitere Modifizierungsmittel wie Antioxidantien, Pigmente, Weichmacher und Füllstoffe sowie Materialien, die die Bindegeschwindigkeit erhöhen, der Mischung aus (a) und (b) zugesetzt werden.

Im allgemeinen soll die äußere Schicht (1) eine Dicke zwischen 0,5 und 8,0 mm, die innere Schicht (2) von 0,01 bis 0,2 mm und die äußere Schicht (3) von 0,2 bis 5 mm aufweisen.

Beispiel 1

Zur Herstellung einer Gepäckraumabdeckung für einen PKW-Kombi wird ein kaschiertes Halbzeug gefertigt.

Dazu wird eine 3,5 mm dicke Trägerschicht, bestehend aus 60 Gew.% isotaktischem Polypropylen der Dichte 0,907 und 40 Gew.% feinteiliges Holzmehl und üblichen Zusätzen an Stabilisatoren und Verarbeitungshilfsmitteln, extrudiert und auf die noch ca. 200°C heiße Schmelzeschicht eine 100 µm dicke Schicht aus einem Kleber über einen zweiten Extruder aufgegeben (Massetemp. ca. 210°). Dieser Schmelzkleber besteht aus einem 70 : 30-Copolyätherester/Harzgemisch in welchem der Copolyätherester aus 50 Gew.% Terephthalsäure, 50 Gew.% Isophthalsäure, Butandiol-1.4 und 50 Gew.% (bezogen auf Gesamt-Copolyätherester) Polytetramethylenätherglykol (Molekulargewicht 2 000) zusammengesetzt ist. Als Harz wurde ein Cumaron/Inden-Harz mit Schmelzpunkt 110°C verwendet.

Im nachfolgenden Glättwerk wird auf die Schmelzkleberseite der Verbundschicht eine kompakte, eingefärbte PVC-Weichfolie mit 35 Gew.% Phthalsäureester-Weichmacher von 0,5 mm Dicke, die durch IR-Strahler auf der Rückseite auf ca. 70°C aufgeheizt wurde, mit einem Druck von 10 bar aufgepreßt und durch Abkühlen des Verbundes auf ca. 100°C fixiert.

Die Eigenschaften der Klebeschicht wurden nach verschiedenen Methoden geprüft. Die Haftfestigkeit der PVC-Folie an der Trägerschicht wurde bei Raumtemperatur im Schälversuch nach DIN 53 289 ermittelt. Die Haftung war so gut, daß bei der Mehrzahl der Proben eher die Folie riß oder das Trägermaterial brach, als daß sich die Folie vom Untergrund löste. Das entspricht einer Schälfestigkeit von über 3,5 N/mm.

In einem improvisierten Laborversuch wird die Wärmebeständigkeit dadurch geprüft, daß streifenförmige Proben im Wärmeschrank waagerecht eingespannt und die Folien mit Gewichten auf Schälung belastet werden. Während die bisher eingesetzten Kleber bereits zwischen 70 und 90°C abzuziehen waren, zeigten die mit dem erfindungsgemäßen Haftvermittler verklebten Proben auch bei 110°C noch keine Ablösungen.

Nach Dauerwärmelagerung bei 80°C wurden im nachfolgenden Schältest bei Raumtemperatur bis zu Lagerzeiten von 1.000 h kein wesentlicher Abfall der Haftfestigkeit ermittelt.

Eine nach dem Beschichten mit Schmelzkleber aufgewickelte PVC-Weichschaumfolie wurde zur Prüfung des Blockens 2 Tage bei 40°C gelagert. Danach konnte sie noch problemlos abgewickelt werden.

Diese kaschierte Plattenware wird dann zur Herstellung der Abdeckung in einem Plattenheizgerät in 6 min auf 200°C (Oberflächentemperatur der Rückseite) bzw. 80°C (Folienseite) aufgeheizt und in einem kalten (Raumtemperatur) Stahlwerkzeug mit einem Druck von 15 bar verpreßt und gleichzeitig ausgestanzt.

Beispiel 2

Ein Ablagefach für einen PKW wird aus einem Trägermaterial und einer Kaschierfolie durch gleichzeitiges Verformen und Verbinden in einem Arbeitsgang hergestellt. Dazu wird ein Zuschnitt aus mit 30 % Holzmehl gefülltem Polypropylen-Halbzeug von 2,5 mm Dicke, das mit einem Zellwoll-Trägervlies ausgerüstet ist, auf eine Temperatur von 195°C und eine "crashpad"-Folie auf 120°C aufgeheizt, gemeinsam in eine kalte Preßform geführt und unter einem Druck von 4,5 bar verpreßt. Nach einer Abkühlzeit von 18 sec wird das fertige Formteil entnommen.

Die 0,6 mm dicke crashpad-Folie auf Basis PVC-ABS hat zur Erzielung einer guten Haftung zur Trägerschicht auf der Rückseite einen Klebstoffilm von 80 g/m$^2$ bestehend aus einem 70 : 30-Copolyätherester/Harz-Gemisch, in welchem der Copolyätherester aus 65 Gew.% Terephthalsäure, 35 Gew.% Isophthalsäure, Butandiol-1.4 und 55 Gew.% (bezogen auf Gesamt-Copolyätherester) Polytetramethylenätherglykol (Molekulargewicht 2 000) zusammengesetzt ist. Als Harz wurde Cumaron/Inden-Harz mit Schmelzpunkt 125°C verwendet. Dieser Kleber wurde im Extrusionsbeschichtungsverfahren bei einer Massetemperatur von 200°C auf die ca. 90°C warme Folie aufgetragen.

Beispiel 3

Für die Fertigung von Türverkleidungen wird wie in Beispiel 2 ein vorgewärmtes 2,5 mm dickes Trägermaterial aus holzmehlgefülltem Polypropylen und eine mit einem Kleber beschichtete Deckfolie gemeinsam in einer Form verpreßt. Die Dekorfolie ist eine Weich-PVC-Schaumfolie von 2,5 mm Dicke, die auf der Sichtseite eine Ledernarbung aufweist. Die Rückseite wurde mit der 15%igen Lösung eines Klebstoffes in Toluol so beschichtet, daß nach der Trocknung ein Auftrag von 20 g/m$^2$ blieb. Der Kleber setzt sich zusammen aus einem 70 : 30-Copolyätherester/Harz-Gemisch, in welchem der Copolyätherester aus 55 Gew.% Terephthalsäure, 45 Gew.% Isophthalsäure, Butandiol-1.4 und 55 Gew.% (bezogen auf Gesamt-Copolyätherester) Polytetramethylenätherglykol (Molekulargewicht 2 000) zusammengesetzt ist. Als Harz diente ein Terpen/Phenol-Harz mit Schmelzpunkt 130°C.

Die Trägerschicht wurde vor dem Verpressen auf 200°C, die Schaumfolie- nur von der Rückseite - auf ca. 90°C aufgeheizt. Der Preßdruck in der Form wurde auf 8 bar eingestellt, um das Verdichten der Schaumfolie gering zu halten. Die Preß- und Kühlzeit betrug 30 sec.

Beispiel 4

Zur Fertigung von kaschierten Seitenverkleidungen für einen PKW wird ein plattenförmiges Trägerhalbzeug aus einem isotaktischen Polypropylen, das mit 40 Gew.% Holzmehl gefüllt ist, extrudiert. Auf die ca. 200°C heiße Schmelzschicht wird mit einem zweiten Extruder eine 100 µm dünne Schicht eines Schmelzklebers mit einer Massetemperatur von 190°C aufgegeben und anschließend beide Schichten in einem Glättwerk gepreßt und abgekühlt. Die der Kleberschicht zugewandte Seite des Glättwerks ist mit einer Antihaftbeschichtung versehen.

Der Schmelzkleber besteht aus einem 75 : 25-Copolyätherester/Harz-Gemisch, in welchem der Copolyätherester aus 45 Gew.% Terephthalsäure, 65 Gew.% Isophthalsäure, Butandiol-1.4 und 50 Gew.% (bezogen auf Gesamt-Copolyätherester) Polytetramethylenätherglykol (Molekulargewicht 2000) zusammengesetzt ist. Als Harz wurde ein Cumaron-Inden-Harz mit Schmelzpunkt 116°C verwendet. Das mit dem Kleber beschichtete Halbzeug wird auf 180°C und die Kaschierfolie aus geschäumtem Weich-PVC auf 70°C angewärmt, zusammen in die Preßform eingeführt und unter einem Druck von 10 bar gepreßt und durch Abkühlen fixiert.

## Patentansprüche

1. Verfahren zur Herstellung von dreischichtigen Verbundwerkstoffen, aufgebaut aus (1) einer äußeren Schicht aus einem Olefinpolymerisat, das 10 bis 60 Gewichtsprozent eines festen inerten Füllstoffs enthält, (2) einer inneren Schicht aus einer Klebstoffmasse, welche thermoplastische, segmentierte Copolyätherester-Elastomere und ein oder mehrere damit verträgliche thermoplastische niedermolekulare Harze mit Schmelzpunkten über $100^{O}C$ enthält und (3) einer äußeren Schicht aus einem - gegebenenfalls geschäumten - Polyvinylchorid, das 15 bis 40 Gew.% eines Weichmachers enthält, oder einer Polyvinylchlorid enthaltenden thermoplastischen Kunststoffmischung, wobei die Schicht (1) mit der Schicht (2) gegebenenfalls koextrudiert wird oder die Schicht (2) aus Lösung aufgebracht wird und beide Schichten (1) und (2) mit der festen Schicht (3) zusammengeführt werden und die äußeren Schichten (1) und (3) bei erhöhter Temperatur sowie gegebenenfalls bei erhöhtem Druck durch die innere Schicht (2) verklebt werden, <u>dadurch gekennzeichnet</u>, daß die Klebstoffmassen der Schicht (2) bestehen zu a) etwa 99 bis 60 Gew.% aus einem thermoplastischen, segmentierten Copolyätherester, der aus einer Vielzahl von wiederkehrenden, durch Esterbindungen miteinander verbundenen kurz- und langkettigen Estereinheiten aufgebaut ist, wobei der Anteil der kurzkettigen Estereinheiten der Formel

$$-\underset{\underset{O}{\|}}{C}-R-\underset{\underset{O}{\|}}{C}-O-A-O-$$

15 bis 75 Gew.% beträgt und der Anteil der langkettigen Estereinheiten der Formel

$$-\underset{\underset{O}{\|}}{C}-R-\underset{\underset{O}{\|}}{C}-O-B-O-$$

25 bis 85 Gew.% des Copolyätheresters beträgt, wobei R den nach Abzug der Carboxylgruppen von aromatischen Dicarbonsäuren mit einem Molekulargewicht unter 350 verbleibenden zweiwertigen Rest, A den nach Abzug der Hydroxylgruppen von einem Diol mit einem Molekulargewicht unter 350 verbleibenden zweiwertigen Rest und B den nach Abzug der endständigen Hydroxylgruppen von einem langkettigen Glykol verbleibenden zweiwertigen Rest bedeuten, und zu b) etwa 1 bis 40 Gew.% eines oder mehrerer niedrigmolekularer thermoplastischer Harze mit Schmelzpunkten über 100°C, die mit dem linearen thermoplastischen Copolyätherester (a) homogene Gemische bilden.

2. Verfahren nach Anspruch 1, <u>dadurch gekennzeichnet</u>, daß die Klebstoffmasse der Schicht (2) besteht aus einem Gemisch aus a) 60 bis 80 Gew.% eines thermoplastischen elastomeren Copolyätheresters, in dem der Anteil der kurzkettigen Estereinheiten 40 bis 60 Gew.% und der Anteil der langkettigen Estereinheiten 40 bis 60 Gew.% beträgt und b) 20 bis 40 Gew.% eines niedrigmolekularen thermoplastischen Harzes mit einem Schmelzpunkt über 100°C, welches mit der Komponente A verträglich ist.

0027587

Europäisches Patentamt

# EUROPÄISCHER RECHERCHENBERICHT

Nummer der Anmeldung
EP 80 10 6024

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D | DE - A - 2 163 670 (E.J. DU PONT)<br>* Patentansprüche 1,2,5 *<br>-- | 1,2 | B 32 B 27/04<br>27/08<br>C 08 G 63/66 |
| D | US - A - 3 013 914 (A. WILLARD)<br>* Patentansprüche 1-13 *<br>-- | 1,2 | |
| | GE - A - 2 004 497 (W. CHARLES HELLER)<br>* Patentansprüche 1,2,5 *<br>---- | 1,2 | |

RECHERCHIERTE SACHGEBIETE (Int. Cl.³)

B 32 B

KATEGORIE DER GENANNTEN DOKUMENTE

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 28-01-1981 | DECOCKER |